# EUROPÄISCHE PATENTSCHRIFT

(11) **EP 2 623 389 B1**
(45) Veröffentlichungstag und Bekanntmachung des Hinweises auf die Patenterteilung: **30.03.2016**
(21) Anmeldenummer: 12450048.9
(22) Anmeldetag: 22.11.2012
(51) Int. Cl.: B61B 12/02

(54) **Laufrolle bzw. Tragrolle für Seilbahnanlagen**
Roller or carrier roller for cable railway systems
Galet de roulement ou rouleau porteur pour téléphériques

(30) Priorität: 06.02.2012 AT 1552012
(43) Veröffentlichungstag der Anmeldung: 07.08.2013
(73) Patentinhaber: Innova Patent GmbH, 6922 Wolfurt (AT)
(72) Erfinder: Luger, Peter, 6850 Dornbirn (AT); Moritzhuber, Johannes, 6971 Hard (AT)
(74) Vertreter: Beer & Partner Patentanwälte KG

(56) Entgegenhaltungen:
- EP-A1- 0 771 709
- EP-A1- 2 314 491
- WO-A1-94/01917
- WO-A1-96/22895
- AT-B- 313 364
- DE-A1-102008 004 085
- DE-U1- 9 201 088
- US-A- 5 236 055

## Beschreibung

Die gegenständliche Erfindung betrifft eine Laufrolle bzw. eine Tragrolle zur Verwendung bei Seilbahnanlagen, mit einem radial innen befindlichen zylindrischen Rohrstück, mit zwei radial außerhalb des Rohrstückes und voneinander in einem axialen Abstand befindlichen ringförmigen Lagern und mit einem radial außerhalb der ringförmigen Lager befindlichen Rollenkörper, welcher mit einem Laufring und mit zwei seitlich desselben befindlichen Bordscheiben ausgebildet ist.

Es ist bei Beförderungsanlagen mit längs Tragseilen oder längs Führungsschienen bewegbaren Fahrzeugen bekannt, die in den Fahrzeugen befindlichen elektrischen Einrichtungen mittels Akkumulatoren mit elektrischer Energie zu versorgen. Dabei besteht das Erfordernis, die Akkumulatoren in den Stationen der Beförderungsanlagen aufzuladen, was jedoch bei solchen Beförderungsanlagen, bei welchen die Fahrzeuge andauernd bewegt werden, einen großen technischen Aufwand bedingt. Zudem besteht mit ansteigendem Ausmaß von elektrischen Geräten das Erfordernis für erhöhte Kapazitäten dieser Akkumulatoren. Aus diesem Grund wird es angestrebt, die erforderliche elektrische Energie durch die Bewegung der Fahrzeuge zu erzeugen, wobei die elektrischen Geräte und Anlagen unmittelbar mit Strom versorgt werden bzw. die Akkumulatoren aufgeladen werden.

Aus der EP-1992539 B1 ist es bekannt, bei einer Seilbahnanlage, bei welcher Seilbahnkabinen längs eines Tragseiles verfahren werden, das Fahrwerk der Seilbahnkabinen mit mindestens einem Reibrad auszustatten, welches am Tragseil abrollt und welches mit einem Generator ausgebildet ist, welcher durch das Reibrad betrieben wird. Hierdurch wird es ermöglicht, durch die Bewegung der Seilbahnkabinen längs eines Tragseiles mittels des am Fahrwerk befindlichen Generators Strom zu erzeugen, durch welchen die in den Seilbahnkabinen befindlichen elektrischen Einrichtungen und Anlagen direkt mit Strom versorgt werden bzw. Akkumulatoren aufgeladen werden.

Diese bekannte Einrichtung bedingt jedoch insofern einen technischen Aufwand, da das Fahrwerk der Seilbahnkabmen zusätzlich mit mindestens einem Reibrad ausgebildet sein muss.

Aus der WO 2008/129019 A1 ist weiters eine Beförderungsanlage bekannt, welche mit Laufrollen versehene Fahrzeuge aufweist, wobei eine der Laufrollen mit einem Generator ausgebildet ist. Dabei befindet sich der Generator an der Außenseite dieser Laufrolle, wobei dessen Rotor zugleich mit der Laufrolle verdreht wird.
Diese bekannte Einrichtung ist jedoch deshalb nachteilig, da bei der konstruktiven Gestaltung der gesamten Beförderungsanlage berücksichtigt werden muss, dass die Fahrzeuge mit mindestens einer Laufrolle ausgebildet sind, von welcher in axialer Richtung ein Generator abragt. Zudem besteht das Erfordernis, diesen außen an den Laufrollen befindlichen Generator gegen störende Einflüsse, insbesondere gegen den Eintritt von Feuchtigkeit und Wasser, zu schützen.

Bei Seilbahnanlagen liegt weiters der Sachverhalt vor, dass die Trag- und Förderseile für die Seilbahnkabinen bzw. die Zugseile für entlang von Tragseilen bewegten Seilbahnkabinen im Bereich von Stützen über Tragrollen geführt sind, welche durch die Bewegung der Trag- und Förderseile bzw. der Zugseile verdreht werden und dass auch an Stützen elektrische Einrichtungen, wie Sender, Empfänger, Steuergeräte, Messgeräte u.dgl., vorgesehen sind, für welche eine elektrische Versorgung vorgesehen sein muss. Diese elektrischen Einrichtungen werden bisher über zu den Stützen verlegte elektrische Leitungen mit Strom versorgt. Alternativ dazu sind an den Stützen Solarkollektoren und Akkumulatoren vorgesehen, durch welche eine elektrische Versorgung erfolgt.

Der gegenständlichen Erfindung liegt die Aufgabe zugrunde, eine Laufrolle für ein Fahrzeug einer Seilbahnanlage bzw. eine Tragrolle für ein Trag- und Förderseil bzw. für ein Zugseil einer Seilbahnanlage, zu schaffen, durch welche bei deren Verdrehung auch die Funktion eines elektrischen Generators erfüllt wird, wobei die den bekannten mit einem Generator ausgebildeten Rollen anhaftenden Nachteile vermieden werden.

Diese Aufgabe wird bei einer Laufrolle bzw. einer Tragrolle zur Verwendung bei Seilbahnanlagen, mit einem radial innen befindlichen zylindrischen Rohrstück, mit zwei radial außerhalb des Rohstückes und voneinander in einem axialen Abstand befindlichen ringförmigen Lagern und mit einem radial außerhalb der ringförmigen Lager befindlichen Rollenkörper, welcher mit einem Laufring und mit zwei seitlich desselben befindlichen Bordscheiben ausgebildet ist, dadurch gelöst, dass die Rolle mit einem ringförmigen elektrischen Generator ausgebildet ist, welcher sich innerhalb eines vom Rollenkörper und den beiden ringförmigen Lagern umgebenen Hohlraumes befindet.

Vorzugsweise ist der elektrische Generator durch einen ringförmigen Stator mit mindestens einer Induktionsspule und mit mindestens einem gegenüber dem Stator bewegbaren Permanentmagneten gebildet, wobei der ringförmige Stator, welcher vom Rohrstück getragen ist, sich radial außerhalb des Rohrstückes und in axialer Richtung zwischen den beiden ringförmigen Lagern befindet, und der mindestens eine Permanentmagnet, welcher sich radial außerhalb des Stators befindet, mit dem gegenüber dem Rohrstück verdrehbaren Rollenkörper auf Verdrehung verbunden ist.
Dabei kann sich der mindestens eine Permanentmagnet auf einem Tragring befinden bzw. können Permanentmagneten als Tragring ausgebildet sein, wobei der Tragring am Rollenkörper befestigt ist. Weiters kann sich der ringförmige Stator auf einem am Rohrstück angeordneten ringförmigen Träger befinden.

Nach einer weiters bevorzugten Ausführungsform ist der Rollenkörper zweiteilig ausgebildet und umgeben die beiden Teile des Rollenkörpers den ringförmigen Hohlraum, in welchem sich der ringförmige Generator befindet.

Der Gegenstand der Erfindung ist nachstehend anhand eines in der Zeichnung dargestellten Ausführungsbeispiels näher erläutert. Es zeigen:
- FIG.1: einen Abschnitt einer Seilbahnanlage mit einer Seilbahnkabinen, welche mittels eines Fahrwerkes, das durch ein Zugseil bewegt wird, längs eines Tragseiles der Seilbahnanlage verfahrbar ist, in Seitenansicht,
- FIG.2: eine Stütze der Seilbahnanlage, auf welcher sich eine Rollenbatterie befindet, über welche ein Trag- und Förderseil geführt ist, in Seitenansicht,
- FIG.3: eine erste Ausführungsform einer erfindungsgemäßen Laufrolle bzw. Tragrolle für eine Seilbahnanlage, in axialem Schnitt,
- FIG.3A: die Laufrolle bzw. Seilrolle gemäß FIG.3 in einem Schnitt nach der Linie IIIA-IIIA der FIG.3 und in gegenüber FIG.3 verkleinertem Maßstab,
- FIG.4: die Laufrolle bzw. Tragrolle gemäß FIG.3, im Schnitt sowie in auseinander gezogener Darstellung sowie in gegenüber FIG.3 verkleinertem Maßstab, und
- FIG.5: eine zweite Ausführungsform einer erfindungsgemäßen Laufrolle bzw. Tragrolle, in axialem Schnitt.

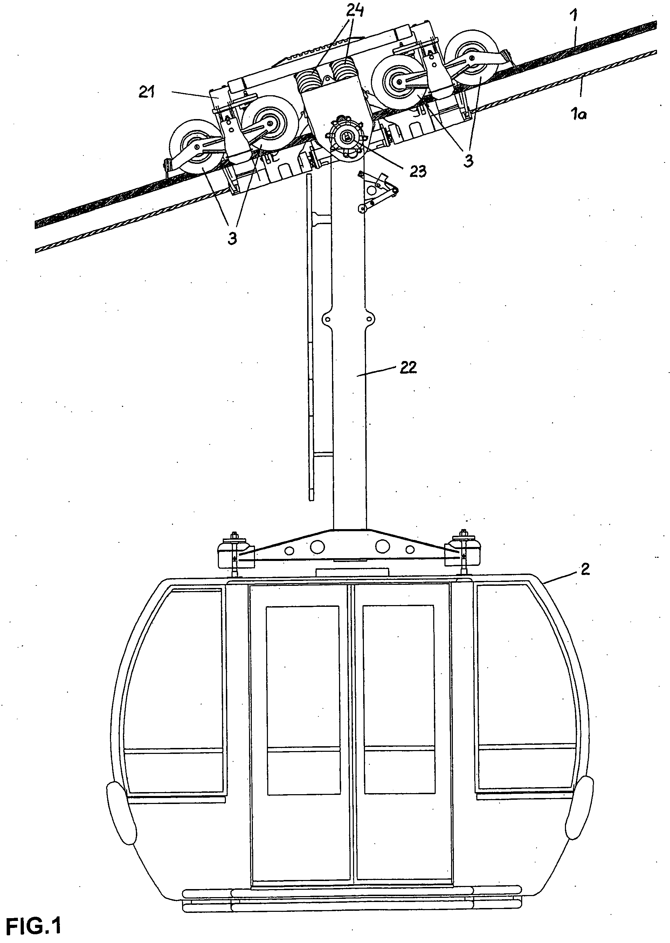

In FIG. 1 ist der Abschnitt einer Seilbahnanlage dargestellt, welche ein Tragseil 1, ein Zugseil 1a und Seilbahnkabinen 2 aufweist, wobei die Seilbahnkabinen 2 mittels des Zugseiles 1a längs des Tragseiles 1 verfahrbar sind. Die Seilbahnkabinen 2 sind mit an einem Fahrwerk 21 gelagerten Laufrollen 3 ausgebildet, wobei das Fahrwerk 21, an welchem die Seilbahnkabine 2 mittels einer Tragstange 22 befestigt ist, längs des Tragseiles 1 verfahrbar ist. Die Tragstange 22 ist am Fahrwerk 21 mittels eines Gelenkes 23 um eine angenähert im rechten Winkel zur Bewegungsrichtung und angenähert horizontal ausgerichtete Achse verschwenkbar. Das Fahrwerk 21 ist mit einer Klemmeinrichtung 24 ausgebildet, mittels welcher die Seilbahnkabine 2 an das Zugseil 1a ankuppelbar ist.

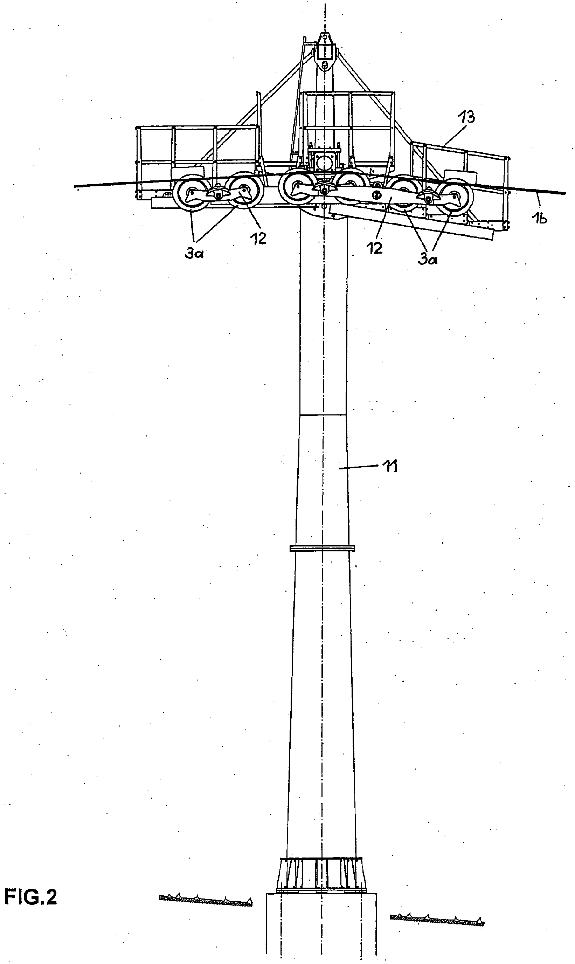

In FIG.2 ist eine Stütze 11 dieser Seilbahnanlage dargestellt, an deren oberem Ende sich auf Schwingen 12 angeordnete Tragrollen 3a befinden, über welche ein Trag- und Förderseil 1b geführt ist. Durch die Bewegung des Trag- und Förderseiles 1b werden die Tragrollen 3a verdreht. Am oberen Ende der Stütze 11 befindet sich weiters eine Wartungsbühne 13.

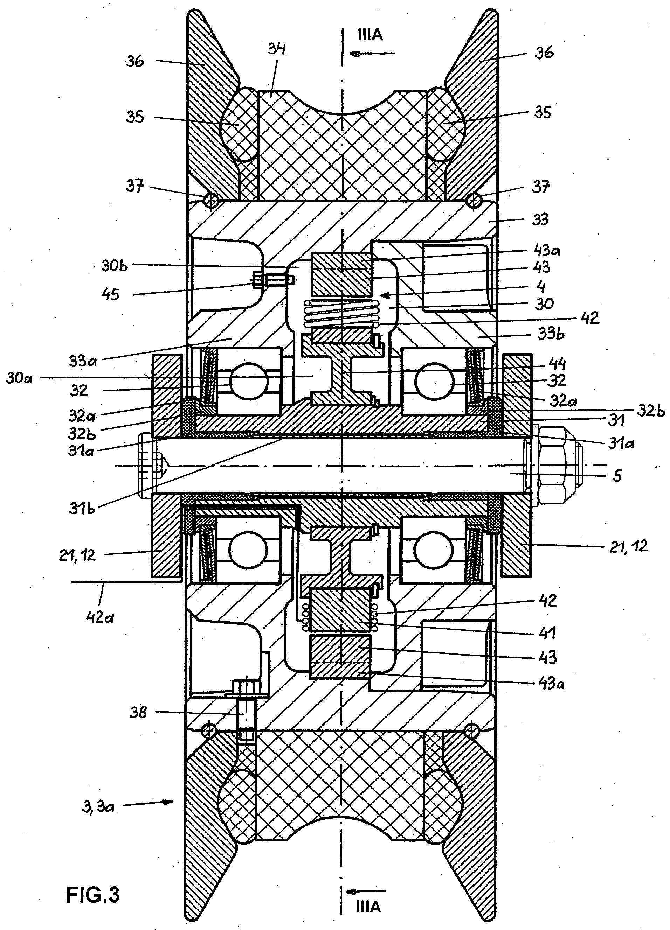

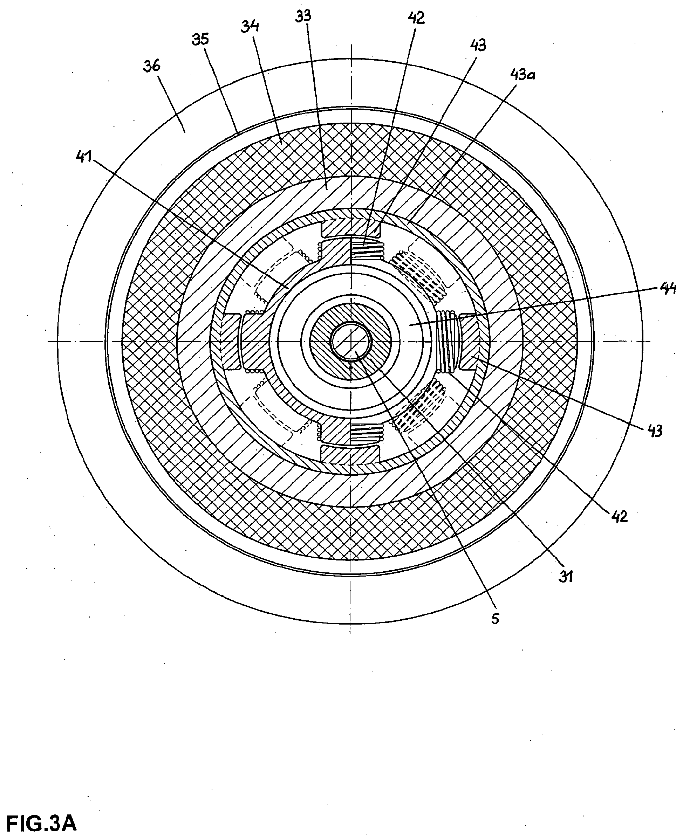

Die in den FIG.3 und FIG.3A dargestellte Laufrolle 3 bzw. Tragrolle 3a besteht aus einem radial innen liegenden zylindrischen, an seinem radialen Umfang mit Absätzen ausgebildeten Rohrstück 31, auf welches zwei in axialem Abstand voneinander befindliche ringförmige Lager 32 aufgesetzt sind, welchen Dichtungslamellen 32a zugeordnet sind und welche mittels Distanzringen 32b in ihren axialen Lagen gehalten sind. Radial außerhalb der beiden ringförmigen Lager 32 befindet sich ein Rollenkörper 33. Radial außerhalb des Rollenkörpers 33 befindet sich ein Laufring 34, an welchen unter Zwischenlage von elastischen Ringen 35 seitlich jeweils eine Bordscheibe 36 angesetzt ist. Die Bordscheiben 36 sind am Rollenkörper 33 durch Sicherungsringe 37 in ihrer Lage gehalten. Der Rollenkörper 33 besteht aus zwei Rollenkörperteilen 33a und 33b.

In das Rohrstück 31 sind an seinen beiden Enden elektrisch isolierende Hülsen 31a und in seinem mittleren Bereich eine mittlere Hülse 31b eingesetzt, welche Hülsen 31a und 31b aus einem Kunststoffmaterial bestehen. Der Laufring 34 ist aus einem hartelastischen Kunststoffmaterial hergestellt. Die elastischen Ringe 35 dienen dazu, die beiden Bordscheiben 36 gegen die Sicherungsringe 37 zu drücken. Im Rollenkörper 33 befindet sich weiters eine Schraube 38, welche zur Lagesicherung des Laufringes 34 dient.

Zwischen dem Rohrstück 31 und dem Rollenkörper 33 befindet sich ein ringförmiger Hohlraum 30, welcher dadurch gebildet ist, dass sich die beiden ringförmigen Lager 32 voneinander in einem axialen Abstand befinden, wodurch zwischen diesen ein Ringraum 30a gebildet ist, und dass der Rollenkörper 33 in seinem mittleren Bereich mit einer ringförmigen Ausnehmung 30b ausgebildet ist. Im ringförmigen Hohlraum 30 befindet sich ein Generator 4, welcher aus einem ringförmigen Weicheisenkern 41 an diesem befindlichen Induktionsspulen 42 und diesem zugeordneten Permanentmagneten 43 besteht. Die Induktionsspulen 42 sind in Serie geschaltet. Der Weicheisenkern 41 ist auf einem Tragring 44 befestigt, welcher gleichfalls auf das Rohrstück 31 aufgesetzt ist. Die Permanentmagneten 43 sind auf einem Tragring 43a befestigt bzw. sind als Tragring 43a ausgebildet, wobei dieser Tragring 43a gleichfalls in den innerhalb des Rollenkörpers 33 befindlichen Hohlraum 30 eingesetzt ist und mit dem Rollenkörper 33 auf Verdrehung gekuppelt ist.

Der Weicheisenkern 41 mit den Induktionsspulen 42 stellt dabei den Stator des Generators 4 dar. Demgegenüber stellen die Permanentmagneten 43, welche mit dem Rollenkörper 33 gegenüber dem Rohrstück 31 verdrehbar sind, den Rotor des Generators 4 dar. An die Induktionsspulen 42 schließt eine Leitung 42a an, welche aus der Rolle 3, 3a hinausgeführt ist. Der Rollenkörperteil 33a ist mit einem Druckausgleichselement 45 ausgebildet, durch welches hindurch im Hohlraum 30 befindliche Feuchtigkeit aus diesem austreten kann.

Die Laufrolle 3 bzw. Tragrolle 3a ist mittels eines das Rohrstück 31 durchsetzenden Bolzens 5 am Fahrwerk 21 einer Seilbahnkabine 2 bzw. auf einer Schwinge 12, welche sich auf einer Tragstütze 11 befindet, befestigt. Hierdurch sind das Rohrstück 31 und mit diesem der Stator des Generators 4 gestellfest angeordnet, wogegen der Rollenkörper 33 und mit diesem die Permanentmagneten 43 mittels der ringförmigen Lager 32 gegenüber dem Rohrstück 31 verdrehbar sind.

Durch eine Verdrehung des Rollenkörpers 33 gegenüber dem Rohrstück 31 erfolgt eine Bewegung der Permanentmagneten 43 gegenüber den Induktionsspulen 42, wodurch in diesen ein Wechselstrom erzeugt wird, welcher über die Leitung 42a zu den in der Seilbahnkabine 2 bzw. an den Stützen 11 vorgesehenen elektrischen Verbrauchern bzw. zu Akkumulatoren geführt wird. Die Verdrehung einer Laufrolle 3 erfolgt durch deren Abrollen längs eines Tragseiles 1 und die Verdrehung einer Tragrolle 3a erfolgt durch ein über diese geführtes Zugseil 1a bzw. durch ein über diese geführtes Trag-und Förderseil 1b.

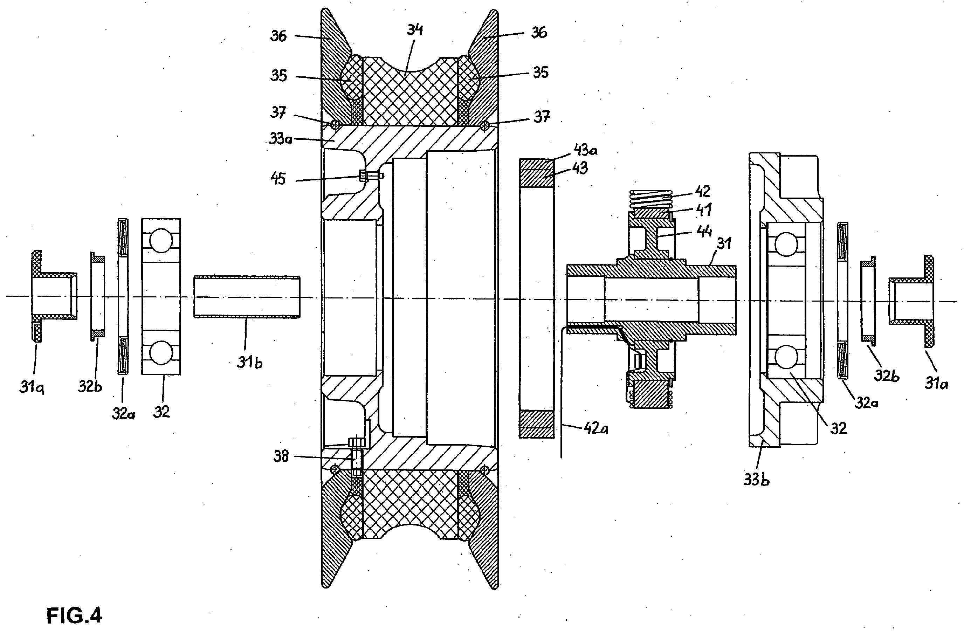

Nachstehend ist anhand der FIG.4 die Zusammenstellung einer Tragrolle 3 bzw. einer Laufrolle 3a erläutert. Der erste Rollenkörperteil 33a ist mit dem Laufring 34, den elastischen Ringen 35, den Bordscheiben 36, den Sicherungsringen 37, dem Druckausgleichselement 45 und mit der Sicherungsschraube 38 ausgebildet. Die Innenfläche des ersten Rollenkörperteiles 33a ist mit ringsum verlaufenden Absätzen ausgebildet. In den Rollenkörperteil 33a wird von rechts her der Tragring 43a mit den Permanentmagneten 43 eingesetzt. In weiterer Folge wird von links her das linke ringförmige Lager 32 eingepresst. Anschließend wird von rechts her das vormontierte Rohrstück 31 mit dem Tragring 44, dem Weicheisenkern 41, den Induktionsspulen 42 und der Leitung 42a in das ringförmige linke Lager 32 eingesetzt. Hierauf werden von rechts her in den ersten Rollenkörperteil 33a und auf das Rohrstück 31 der zweite Rollenkörperteil 33b mit dem in diesen eingepressten ringförmigen rechten Lager 32 eingesetzt. Schließlich werden von links her die Hülse 31b, eine Dichtungslamelle 32a, ein Distanzring 32b und eine Hülse 31a sowie von rechts her eine Dichtungslamelle 32a, ein Distanzring 32b und eine Hülse 31a eingesetzt.

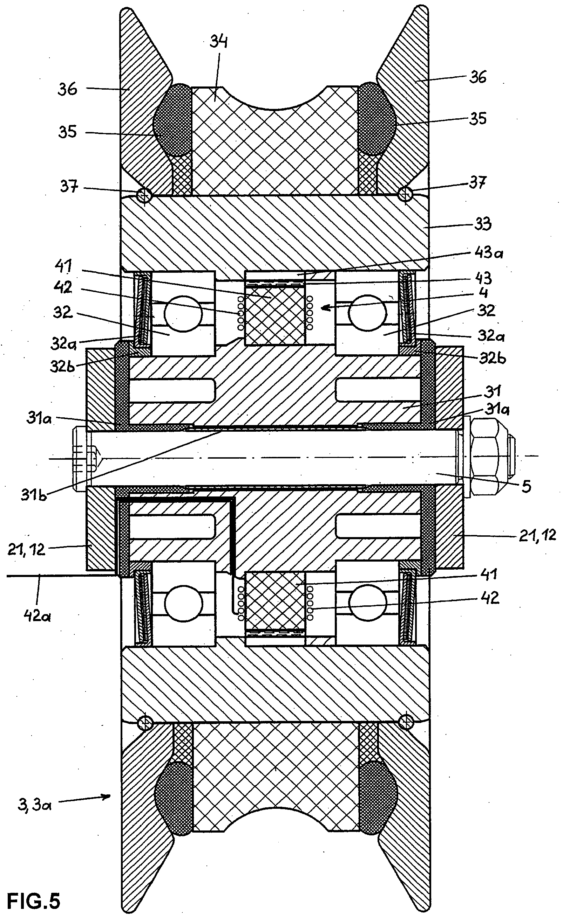

Die in FIG. 5 dargestellte zweite Ausführungsform einer erfindungsgemäßen Laufrolle 3 bzw. Tragrolle 3a stimmt mit der in FIG.3 dargestellten Laufrolle 3 bzw. Tragrolle 3a weitgehend überein, wobei die funktionell gleichen Bauteile mit gleichen Bezugszahlen versehen sind. Diese Laufrolle 3 bzw. Tragrolle 3a unterscheidet sich von der Rolle 3, 3a gemäß FIG.3 dadurch, dass der Rollenkörper 33 einstückig ausgebildet ist, wobei er angenähert hohlzylindrisch ist. Hierdurch können in diesen der Tragring 31, der Weicheisenkern 41 mit den Induktionsspulen 42, der mit den Permanentmagneten 43 ausgebildete Tragring 43a, die beiden ringförmigen Lager 32, die Dichtungslamellen 32a, die Distanzringe 32b und die Hülsen 31a sowie 31b eingesetzt werden.

Hiermit sind eine Laufrolle 3 bzw. eine Tragrolle 3a geschaffen, welche in ihrer äußeren Gestaltung mit den in der Seilbahnanlage verwendeten Laufrollen bzw. Tragrollen identisch übereinstimmt, wodurch sie anstelle einer der Laufrollen bzw. Tragrollen einsetzbar ist, wobei sie zudem die Funktion eines elektrischen Generators erfüllt, ohne dass es hierfür weiterer technischer Maßnahmen bedarf. Eine derartige Laufrolle bzw. Tragrolle dient zusätzlich zur Erzeugung von Strom zur Speisung von elektrischen Geräten oder von Akkumulatoren.

Dadurch, dass sich der Generator 4 im Inneren dieser Laufrolle 3 bzw. Tragrolle 3a befindet, ist er gegenüber klimatischen Einflüssen, insbesondere gegenüber dem Eindringen von Wasser bzw. Feuchtigkeit, in optimaler Weise gesichert.

## Patentansprüche

1. Laufrolle (3) bzw. Tragrolle (3a) zur Verwendung bei Seilbahnanlagen, mit einem radial innen befindlichen zylindrischen Rohrstück (31), mit zwei radial außerhalb des Rohrstückes und voneinander in einem axialen Abstand befindlichen ringförmigen Lagern (32) und mit einem radial außerhalb der ringförmigen Lager (32) befindlichen Rollenkörper (33), welcher mit einem Laufring (34) und mit zwei seitlich desselben befindlichen Bordscheiben (36) ausgebildet ist, **dadurch gekennzeichnet, dass** die Rolle (3, 3a) mit einem ringförmigen elektrischen Generator (4) ausgebildet ist, welcher sich innerhalb eines vom Rollenkörper (33) und den beiden ringförmigen Lagern (32) umgebenen Hohlraumes (30) befindet.

2. Laufrolle bzw. Tragrolle nach Patentanspruch 1, **dadurch gekennzeichnet, dass** der elektrische Generator (4) durch einen ringförmigen Stator (41, 42) mit mindestens einer Induktionsspule (42) und durch mindestens einen gegenüber dem Stator (41, 42) bewegbaren Permanentmagneten (43) gebildet ist, wobei der ringförmige Stator (41, 42), welcher vom Rohrstück (31) getragen ist, sich radial außerhalb des Rohrstückes (31) und in axialer Richtung zwischen den beiden ringförmigen Lagern (32) befindet, und der mindestens eine Permanentmagnet (43), welcher sich radial außerhalb des Stators (41, 42) befindet, mit dem gegenüber dem Rohrstück (31) verdrehbaren Rollenkörper (33) auf Verdrehung verbunden ist.

3. Laufrolle bzw. Tragrolle nach Patentanspruch 2, **dadurch gekennzeichnet, dass** der mindestens eine Permanentmagnet (43) als Tragring (43a) ausgebildet ist bzw. sich auf einem Tragring (43a) befindet, wobei der Tragring (43a) am Rollenkörper (33) befestigt ist.

4. Laufrolle bzw. Tragrolle nach einem der Patentansprüche 2 oder 3, **dadurch gekennzeichnet, dass** sich der ringförmige Stator (41, 42) auf einem am Rohrstück (31) angeordneten ringförmigen Träger (44) befindet.

5. Laufrolle bzw. Tragrolle nach einem der Patentansprüche 2 bis 4, **dadurch gekennzeichnet, dass** der Rollenkörper (33) zweiteilig ausgebildet ist und dass die beiden Rollenkörperteile (33a, 33b) einen ringförmigen Hohlraum (30) umgeben, in welchem sich der ringförmige Generator (4) befindet.

## Claims

1. Roller (3) or carrying roller (3a) for use in cableway systems, with a radially inner, cylindrical tube section (31), with two annular bearings (32) that are located radially outside the tube section and axially spaced apart from one another, and with a roller body (33) that is located radially outside the annular bearings (32) and realized with a raceway (34) and with two flanged wheels (36) located laterally thereof, **characterized in that** the roller (3, 3a) is realized with an annular electric generator (4) that is located within a cavity (30) enclosed by the roller body (33) and the two annular bearings (32).

2. Roller or carrying roller according to claim 1, **characterized in that** the electric generator (4) is formed by an annular stator (41, 42) with at least one induction coil (42) and by at least one permanent magnet (43) that can be moved relative to the stator (41, 42), wherein the annular stator (41, 42), which is carried by the tube section (31), is located radially outside the tube section (31) and axially between the two annular bearings (32), and wherein the at least one permanent magnet (43), which is located radially outside the stator (41, 42), is rotationally connected to the roller body (33) that is rotatable relative to the tube section (31).

3. Roller or carrying roller according to claim 2, **characterized in that** the at least one permanent magnet (43) is respectively realized in the form of a retaining ring (43a) or located on a retaining ring (43a), wherein the retaining ring (43a) is fastened on the roller body (33).

4. Roller or carrying roller according to claim 2 or 3, **characterized in that** that the annular stator (41, 42) is located on an annular carrier (44) arranged on the tube section (31).

5. Roller or carrying roller according to one of claims 2-4, **characterized in that** the roller body (33) is composed of two parts, and **in that** the two roller body parts (33a, 33b) enclose an annular cavity (30), in which the annular generator (4) is located.

## Revendications

1. Galet de roulement (3) ou galet porteur (3a) pour utilisation sur des installations de téléphérique avec une pièce tubulaire cylindrique (31) se trouvant radialement à l'intérieur , avec deux paliers (32) annulaires se trouvant radialement à l'extérieur de la pièce tubulaire et à une distance axiale l'un de l'autre et avec un corps de galet (33) se trouvant radialement à l'extérieur des paliers annulaires (32), lequel est constitué avec une bague de roulement (34) et avec deux disques de bordure (36) se trouvant latéralement à celle-ci **caractérisé en ce que** le galet (3,3a) est constitué avec un générateur électrique de forme annulaire (4), lequel se trouve à l'intérieur d'un espace creux (30) entouré par le corps de galet (33) et les deux paliers de forme annulaire (32).

2. Galet de roulement ou galet porteur selon la revendication 1 **caractérisé en ce que** le générateur électrique (4) est constitué par un stator de forme annulaire (41,42) avec au moins une bobine d'induction (42) et par au moins un aimant permanent (43) mobile par rapport au stator (41, 42), pour lequel le stator de forme annulaire (41,42), lequel est porté par la pièce tubulaire (31) se trouve radialement à l'extérieur de la pièce tubulaire (31) et dans la direction axiale entre les deux paliers de forme annulaire (32) et au moins l'aimant permanent (43), lequel se trouve radialement à l'extérieur du stator (41,42), est raccordé en rotation au corps de galet (33) pouvant tourner par rapport à la pièce tubulaire (31).

3. Galet de roulement ou galet porteur selon la revendication 2 **caractérisé en ce qu'**au moins un aimant permanent (43) est constitué comme anneau porteur (43a) ou se trouve sur un anneau porteur (43a), pour lequel l'anneau porteur (43a) est fixé sur le corps de galet (33).

4. Galet de roulement ou galet porteur selon l'une quelconque des revendications 2 ou 3 **caractérisé en ce que** le stator de forme annulaire (41,42) se trouve sur un support de forme annulaire (44) disposé sur une pièce tubulaire (31).

5. Galet de roulement ou galet porteur selon l'une quelconque des revendications 2 à 4 **caractérisé en ce que** le corps de galet (33) est constitué en deux parties et **en ce que** les deux parties du corps de galet (33a,33b) entourent un espace creux de forme annulaire (30) dans lequel se trouve le générateur de forme annulaire (4).
